(19) Europäisches Patentamt
European Patent Office
Office européen des brevets

(11) Publication number: **0 557 992 A1**

(12) # EUROPEAN PATENT APPLICATION

(21) Application number: **93102961.5**

(51) Int. Cl.[5]: **C08F 283/04**

(22) Date of filing: **25.02.93**

(30) Priority: **25.02.92 JP 75380/92**
**06.03.92 JP 84920/92**
**15.12.92 JP 354509/92**

(43) Date of publication of application:
**01.09.93 Bulletin 93/35**

(84) Designated Contracting States:
**BE DE FR GB IT**

(71) Applicant: **KANEGAFUCHI KAGAKU KOGYO KABUSHIKI KAISHA**
**2-4 Nakanoshima 3-chome**
**Kita-ku Osaka-shi(JP)**

(72) Inventor: **Mihoichi, Masahiko**
**1-1-324-403, Kitaochiai, Suma-ku**
**Kobe-shi, Hyogo-ken(JP)**
Inventor: **Kurimoto, Kenji**
**17-11, Wakabadai 3-chome, Kita-ku**
**Kobe-shi, Hyogo-ken(JP)**
Inventor: **Nakamura, Masaaki**
**3-26-306, Kitamachi 3-chome, Nishiakashi**
**Akashi-shi, Hyogo-ken(JP)**
Inventor: **Kawauchi, Toshihito**
**12-14, Horaku-cho**
**Nishinomiya-shi, Hyogo-ken(JP)**
Inventor: **Asada, Masahiro**
**45-102, 8-1-1, Yokoo, Suma-ku**
**Kobe-shi, Hyogo-ken(JP)**
Inventor: **Okura, Tetsuo**
**Sanseisoh, 6-31-17, Shioya-cho**
**Tarumi-ku, Kobe-shi, Hyogo-ken(JP)**
Inventor: **Tonoki, Satoshi**
**38-1-202, Senrioka-kami**
**Suita-shi, Osaka-fu(JP)**

(74) Representative: **VOSSIUS & PARTNER**
**Postfach 86 07 67**
**D-81634 München (DE)**

(54) **Thermosetting resin compositions.**

(57) The invention discloses a thermosetting resin composition comprising (a) a compound containing at least one epoxy group and at least one vinyl group in a molecule, (b) an aromatic amine curing agent, and (c) a radical polymerization intiator. The composition may further contain (d) a polyetherimide, or (d) and (e) a bisphenol A type epoxy compound, or (e) and (f) a polyethersulfone. The themosetting resin compositions have well-proportionate mechanical strength, toughness and thermal resistant property.

EP 0 557 992 A1

The present invention relates to novel thermosetting resin compositions capable of producing molded articles having high thermal resistant property and high toughness, while maintaining satisfactory molding property.

Owing to surpassing thermal resistant property and mechanical strength, epoxy resins have widely been applied to the field of a matrix resin of reinforced plastics. Conventionally, the epoxy resins for practical use include, for example, a bisphenol A diglycidyl ether type and a phenol novolak type. In particular, polyfunctional epoxy compounds like N, N, N', N'-tetraglycidyl aminodiphenylmethane are made available for aircraft components requiring extremely high thermal resistant property.

However, even though those epoxy resins have surpassing thermal resistant property, they are still defective because of inclination to lower toughness. Concretely, when indicating toughness in terms of the plain strain fracture toughness klc, the klc value of epoxy resins is approximately 1.0 $kg/mm^{3/2}$.

On the other hand, though thermoplastic resins including some of aromatic polymers having high thermal resistant property are commercially available, these thermoplastic resins are inclined to be inferior to thermosetting resins like epoxy resins in the molding property because of requiring a high temperature upon molding thereof.

Under such background situation, a useful molding material having surpassing thermal resistant property and toughness while maintaining satisfactory molding property has long been desired.

The Japanese Laid-Open Patent Publication No. 110410/1984 proposes a composition comprising a specific compound represented by the structural formula (4) as shown later, an aliphatic polyamine and a radical polymerisation initiator. However, since the aliphatic polyamine is used as a curing agent, toughness of this composition is relatively high in epoxy resins but thermal resistant property is low. On the other hand, the Japanese Laid-Open Patent Publication No. 271515/1984 uses a Lewis acid as a curing agent. The composition proposed has very high cross-linked density, and thus, thermal resistant property is high but toughness is low. Moreover, the Japanese Laid-Open Patent Publication No. 112723/1987 uses a condensate comprising a compound represented by the structural formula (4) as shown later, 2,6-xylenol, and N-methylol acrylamide, for example. Although this composition has high thermal resistant property and relatively high toughness, since a phenolic OH group reacts with an epoxy group, it takes a long time until completing the reaction, thus productivity being lowered.

A variety of arts have been proposed in order to improve toughness of epoxy resins. One of those prior arts improves toughness of an epoxy resin by initially adding a rubber-like copolymer of acrylonitrile-butadiene to the epoxy resin, and then curing the epoxy resin to form a rubber-dispersed phase. Another prior art improves toughness of an epoxy resin by denaturizing the epoxy resin with silicone, acrylic rubber and isocyanate. There is another art which improves toughness of an epoxy resin by adding a high elongation epoxy resin followed by a process for curing it.

Nevertheless, even though any of those prior arts improves toughness of epoxy resins, conversely, thermal resitant property degrades. For example, A.J. Kinloch et al. report in "POLYMER", vol. 24, P1341 (1983) that as a result of denaturization of carboxyl-terminated butadine-acrylonitrile rubber, klc value is rated to be approximately 9 $kg/mm^{3/2}$ to result in high toughness, while Tg is 100 °C or below.

Recently, a variety of trials have been made to compensate for the insufficient toughness of thermosetting resins by mixing thermoplastic resins having relatively high thermal resistant property into the thermosetting resins like epoxy resins. Actually, there is provided such an improved composition having a satisfactory value of klc in excess of 4 $kg/mm^{3/2}$. Nevertheless, phase separation structure of molded articles made from such toughness-improved materials is not always uniform, and therefore, it is still dissatisfactory from the viewpoint of realizing stable property. Furthermore, not only high thermal resistant property and high toughness, but working property including tack-raping property is demanded for an FRP (Fiber Reinforced Plastic) prepreg widely being used for sporting and leisure goods and also for aircraft structural materials. However, depending on the method of mixing thermoplastic resins, tack-draping property is decreased, on the contrary, and when tack-draping property is enhanced by the use of an epoxy resin having low viscosity, thermal resistant property and toughness are apt to lower.

The object of the invention is to solve those technical problems described above by providing novel thermosetting resin compositions which have well-proportionate toughness and thermal resistant property, while maintaining satisfactory molding property.

In order to fully solve those technical problems described above, inventors

have found out specific compositions that could provide cured articles having high thermal resistant property and high toughness while maintaining satisfactory molding property by combining specific components, thus having completed the invention.

The first aspect of the present invention is to provide a novel composition comprising (a) a compound containing at least one epoxy group and at least one vinyl group in its molecule, (b) an aromatic amine

curing agent, and (c) a radical polymerization initiator.

The second aspect of the present invention is to provide a novel composition comprising (a) a compound containing at least one epoxy group and at least one vinyl group in its molecule, (b) an aromatic amine curing agent, (c) a radical polymerization initiator, and (d) a polyetherimide.

The third aspect of the present invention is to provide a novel composition comprising (a) a compound containing at least one epoxy group and at least one vinyl group in its molecule, (b') a curing agent, (c) a radical polymerization initiator, (d) a polyetherimide, and (e) a bisphenol A type epoxy compound.

The fourth aspect of the present invention is to provide a novel composition comprising (a) a compound containing at least one epoxy group and at least one vinyl group in its molecule, (b') a curing agent, (c) a radical polymerization initiator, (e) a bisphenol A type epoxy compound, and (f) a polyethersulfone.

Characteristically, thermosetting resin compositions of the present invention have well-proportionate high thermal resistant property and high toughness, and yet, maintain excellent molding property.

The compound containing at least one epoxy group and at least one vinyl group in its molecule as the component (a) used in the present invention contains one or more epoxy groups and one or more vinyl groups, and a network structure is formed by the reaction of the epoxy groups with an aromatic amine curing agent as the component (b) and the vinyl polymerization caused by a radical polymerization initiator as the componet (c). In this case, the difference of relative velocity between two reactions is quite important; the reaction of the epoxy groups with the aromatic amine curing agent (b) and another reaction of the vinyl groups caused by the radical polymerization initiator (c).

Moreover, by virtue of the synergistic effect of (1) the polymerization reaction promoted form uniformly mixed state of components while controlling the reaction by heating conditions, the kind and amount of a radical polymerization initiator and the kind and amount of a curing agent to be blended, and (2) a mutual action derived from spinodal decomposition-type phase separation caused by the above polymerization reaction and also derived from chemical structures of respective components, the thermosetting resin compositions of the present invention achieve uniform phase separation structure containing a phase in which thermosetting components react in a thermally cured and molded article and then convert into three-dimensional cross-linked body, and also containing another phase comprising a polyetherimide or a polyethersulfone, both phases being mixed with each other in the continuous state.

If the vinyl polymerization proceeds too fast, residual strain of a cured composition becomes large to thus cause the breakdown stress to lower. On the other hand, if the reaction of the epoxy groups with the curing agent proceeds too fast, glass transition teprerature becomes high to result in the difficulty to complete the vinyl polymerization. To complete the vinyl polymerization, if the curing process is intended at a high temperature, it results in the foaming and thermal decomposition of the cured composition, thus degrading toughness and thermal resistant property.

Furthermore, in the case of adding the thermoplastic resin, polyetherimides as the component (d) or polyethersulfones as the component (f), if the remaining reactions of the aforementioned two reactions are caused to take place after completing either of the reaction of the epoxy groups or the vinyl groups, phase separation is violently promoted to result in the degraded mechanical strength and toughness. To prevent this, it is important that the aforementioned two reactions be conducted simultaneously. In particular, it is extremely important not to conduct the reaction of the vinyl groups too fast. For this purpose, a curing temperature should be suitably selected depending on the kind of the aromatic amine curing agent (b) and the radical polymerization initiator (c).

Although it is conventionally known that toughness can be improved by applying polyetherimides or polyethersulfones to bisphenol A type epoxy compounds, the present invention is characterized by achieving improved thermosetting resin compositions through adding the aforementioned component (a) containing at least one epoxy group and at least one vinyl group in its molecule to the aforementioned bisphenol A type epoxy compounds.

More particularly, the component (a) can proceed with the polymerization reaction of vinyl groups in parallel with the reaction of epoxy groups to thus provide a composition having uniform phase separation. Furthermore, the component (a) provides excellent thermal resistant property, and therefore, it imparts to molded articles made from thermosetting resin compositions of the present invention satisfactory physical properties having both high thermal resistant property and high toughness.

In particular, the thermosetting resin compositions of the present invention properly control phase separation to a fine level by the control of the polymerization reaction and the effect of mutual action between respective components, and by the uniform cross-linked structure generated by the control of the polymerization reaction. Above all, the phase separation significantly affects mechanical properties, toughness, and adhesiveness, and therefore, it is important to precisely control it.

The polyetherimide as the component (e) used in the present invention is represented by the structural formula (1), and includes, for example, "ULTEM 1000" (trade name of Japan G. E. Plastic Co., Ltd.).

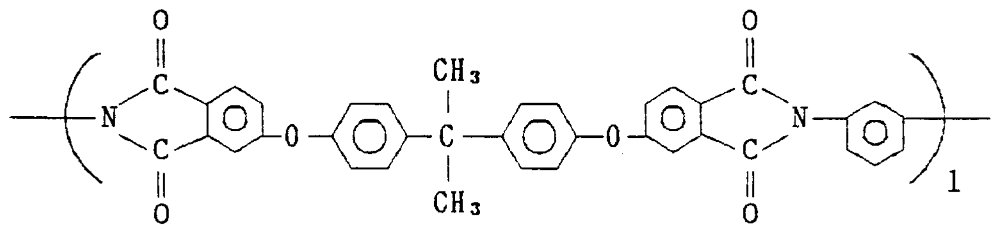

(1)

wherein 1 is an integer of 5 to 500.

Likewise, the polyethersulfone as the component (f) is represented by the structural formula (3), and includes, for example, "VICTREX 4100G" (trade name of Imperial Chemical Industries, Ltd.).

$$-(X-SO_2)_n- \qquad (3)$$

wherein X is at least one group of the following groups:

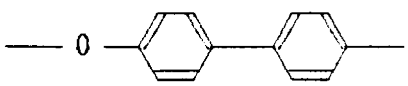

,

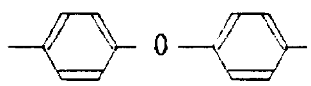

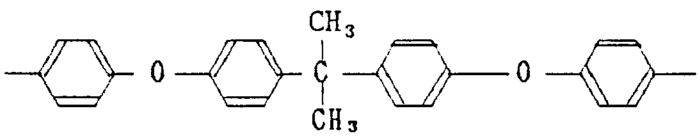

,

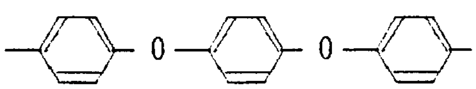

or

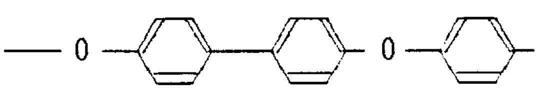

,

and n is 10 to 700.

Although the addition of those thermoplastic resins is known, the feature of the present invention lies in the use of the component (a), conjoint use of the component (a) and the component (b) or (b'), and the uniform compatibility of these components (a) and (b) or (b'). More particularly, by simultaneously conducting the reaction of epoxy groups as the component (a) with the curing agent as the component (b) or (b') and the reaction of vinyl groups with the radical polymerization initiator as the component (c), an effect of providing phase separation by the addition of the polyetherimide as the component (d) and the polyethersulfone as the component (f) can be brought about.

Each amount of the polyetherimide (d) or polyethersulfone (f) is preferably in a range of from 5 to 100 parts by weight to 100 parts by weight of the total amount of the components (a), (b) or (b') and (c). If it is

less than 5 parts by weight, no sufficient effect is provided from the addition of either of these component (d) and (f), thus resulting in the degraded toughness. Conversely, if it is more than 100 parts by weight, a viscosity rises too high and the degraded molding property is resulted. More preferably, 10 to 50 parts by weight of the polyetherimide (d) or polyethersulfone (f) are added. Furthermore, if the molecular weight is too small, little effect of enhancing toughness is achieved, conversely, if it is excessively large, handling property is degraded. Therefore, polyetherimides having a molecular weight of 5,000 to 200,000 are preferred, and polyethersulfones having a molecular weight of 5000 to 150,000 are preferred.

The bisphenol A type epoxy compound as the component (e) used in the present invention is represented by the structural formula (2):

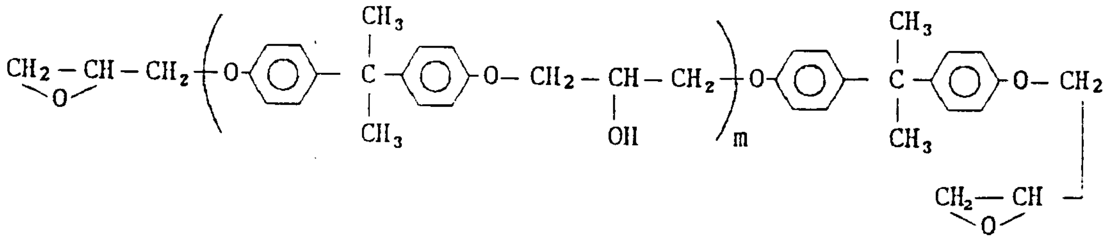

(2)

wherein m is 2.3 or less.

For example, "EPIKOTE 828" (trade name of YUKA- SHELL EPOXY CO.,LTD.) and "D.E.R. 300", "D.E.R. 600" (trade name of Dow Chemical Co.,Inc.) are commercially available.

This component (e) not only enhances compatibility of the component (a) containing at least one epoxy group and at least one vinyl group in its molecule with the polyetherimide (d) and the polyethersulfone (f) to thus achieve uniform phase separation, but improves working efficiency because of reduced viscosity and, moreover, tack-draping property of a prepreg. A variety of bisphenol A type epoxy compounds containing different molecular weights are commercially available. Basically, the component (e) should be uniformly compatible with the component (a), but if the molecular weight is too large, working efficiency lowers and it is difficult to provide sufficient thermal resistant property. Therefore, the bisphenol A type epoxy compound (e) preferably has a molecular weight up to 1000, more preferably, lip to 500. Improvement in working efficiency increases an amount added of the polyetherimide (d) or tile polyethersulfone (f), so that it is possible to more effectively provide high toughness inherent in the polyetherimide or the polyethersulfone. The amount of the component (e) is preferably in a range of from 10 to 90 parts by weight to 100 parts by weight of the total amount of the component (a) and the component (e). If it is outside the above range, fine level uniform phase separation is not achieved to merely result in the insufficient toughness.

The compound containing at least one epoxy group and at least one vinyl group in its molecule as the component (a) is not particularly limited. Since the component (a) contains one or more epoxy groups and one or more vinyl groups, it can be converted into a polymer by the reaction of respective functional groups. The reaction of these functional groups and the structure of the polymer can be controlled in an extensive range by the addition of the aromatic amine curing agent (b) or the other curing agent (b') and the radical polymerization initiator (c).

Among a variety of compounds as the component (a), compounds represented by the structural formulas (4) and (5) and glycidyl methacrylate are preferred, and these compounds may be used singly or in combination of two or more.

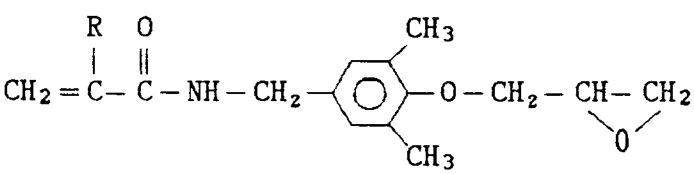

(4)

wherein R is a hydrogen atom or a methyl group.

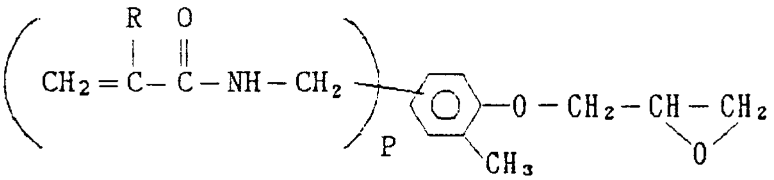 (5)

wherein R is a hydrogen atom or a methyl group and p is 1 or 2.

The compounds represented by the structural formulas (4) and (5) are produced by initially condensing, for example, aromatic hydrocarbon compounds containing at least one phenolic hydroxyl group and alkyl ethers of N-methylol acrylamide and N-methylol methacrylamide in the presence of an acidic catalyst, followed by causing epichlorohydrin to react with the condensed product in the presence of a phase-transfer catalyst. The details of the method for producing the compounds represented by the above structural formulas (4) and (5) are described in the Japanese Patent Publication No. 51550/1989.

Glycidyl methacrylate is commercially available, for example, "BLEMMER G" (trade name of Nippon Yushi K.K.) is mentioned as one of commercially available products.

The curing agents (b) and (b') used in the present invention respectively facilitate the formation of epoxy polymerization network by acting upon the component (a) containg at least one epoxy group and at least one vinyl group in its molecule and the bisphenol A type epoxy compound (e). It is desired that the frame work of those curing agents (b) and (b') contributes to the phase structure of molded articles and imparts well-proportionate thermal resistant property and toughness to the molded articles.

When those curing agents act upon the component (a) containing at least one epoxy group and at least one vinyl group in its molecule, in order to simultaneously attain satisfactory thermal resistant property and toughness, it is necessary to use a curing agent having moderate flexibility and rigidness, and therefore, use of the aromatic amine curing agent (b) is preferred.

If the bisphenol A type epoxy compound (e) is contained in the compositions, since toughness is provided by fine level phase separation, it is preferred to use a curing agent capable of imparting satisfactory thermal resistant property to molded articles.

Concretely, there are included, for example, aromatic amine curing agents such as diaminodiphenyl ether, diaminodiphenyl sulfone, 4,4'-methylene dianiline, benzidine, 4,4'-bis(o-toluidine), 4,4'-thiodianiline, o-phenylene diamine, dianiline, methylene bis(o-chloroaniline), m-phenylene diamine, 2,4-toluene diamine, diaminoditolyl sulfone, 4-methoxy-6-methyl-m-phenylene diamine, 2,6-diaminopyridine, 4-chloro-o-phenylene diamine, m-aminobenzylamine, bis(3,4-diaminophenyl) sulfone; acid anhydride curing agents such as methyltetrahydrophthalic acid anhydride, methyl nadic acid anhydride, pyromellitic acid anhydride, methyl hexahydrophthalic acid anhydride; imidazole curing agents such as 2-methyl imidazole, 2-ethyl-4-methyl imidazole, 2-undecyl imidazole, 1-benzyl-2-methyl imidazole, 2-phenyl imidazole; and potential curing agents such as boron trifluoride-monoethyl amine complex, boron trifluoride-diethyl amine complex. These may be used singly or in combination of two or more. The curing agent (b) may be added in an amount of 0.6 to 1.5 amine equivalents to one epoxy equivalent contained in the component (a).

Although the amount of the curing agent (b') is not limited, in particular, the aromatic amine curing agent may be preferably added in an amount of from 0.5 to 2.0 amine equivalents to one epoxy equivalent contained in the components (a) and (e). More preferably, 0.7 to 1.2 amine equivalents are added. The acid anhydride curing agent may be added in an amount of from 0.5 to 1.5 acid anhydride equivalents to one epoxy equivalent contained in the components (a) and (e), more preferably, 0.7 to 1.2 equivalents. The imidazole curing agent may be added in an amount of from 0.1 to 30 parts by weight to 100 parts by weight of the components (a) and (e), more preferably, from 1 to 15 parts by weight. The potential curing agent may be added in an amount of from 0.1 to 20 parts by weight to 100 parts by weight of the components (a) and (e), more preferably, from 1 to 15 parts by weight. If any of those curing agents is added by such an amount more or less than the ranges specified above, thermal resistant property and toughness are degraded.

In the present invention, a curing accelerating agent for accelerating the reaction between the components (a) and (b) and between the components (a) and (b') or (c) and (b') may optionally be added as required. Any known curing accelerating agents may be used. For example, ureas, phosphines, phenols, alcohols, organic acids, inorganic acids and polymercaptans may be exemplified. These may be used singly or in combination of two or more.

The radical polymerization initiator (c) used in the present invention generates radicals by heating or irradiation of ultraviolet light, and it functions as a radical polymerization initiator of the component (a). The

radical polymerization initiator is not limited, in particular, and any known radical polymerization initiators may be used. It is desired to use those which are dissolved or uniformly dispersed in a mixture of the respective components. For example, organic peroxides may be used. The component (c) may be added singly or in combination of two or more. The amount of the component (c) is not limited in particular, but if it is too small, the radical polymerization does not proceed sufficiently, and if it is too large, burning and bubbling caused by the rapid reaction tend to occur. Therefore, it is preferable to add 0.1 to 10 parts by weight, more preferably, 0.3 to 5 parts by weight of the radical polymerization initiator (c) to 100 parts by weight of the component (a).

The method for mixing the respective components is not limited, in particular, but can be selected according to the objects. For example, there is a method which prepares a uniform solution at a relatively low temperature by using a solvent capable of dissolving respective components. There is another method which initially dissolves the component (a), or the components (a) and (d), or the components (a),(d) and (e), or the components (a) ,(e) and (f) at a relatively high temperature, then after lowering temperature, dissolves the curing agents (b) or (b') and the radical polymerization initiator (c) thereinto.

The curing method is not limited, in particular, but in order to fully provide the effect of the present invention, it is desired to cause the following reactions (A) and (B) to proceed simultaneously; the reaction (A) between the components (a) and (b) or (b'), and the reaction (B) between the component (a) and (c). In particular, in order to improve bending properties, toughness, and thermal resistant property, it is important to control the network structure and phase structure to be generated, and therefore, it is desired that curing should be made so that the reaction of the component (a) and the reaction of the component (e) take place simultaneously through the components (b') and (c).

Depending on the use of the resin compositions of the present invention including, for example, prepregs, structural materials, structural adhesives and sealing materials, those may further contain additives, including reinforcements; a variety of fibers such as glass fiber, carbon fiber, aramid fiber, polyamide (nylon) fiber, polyvinylalcohol (Vinylon) fiber, polyester fiber, super high polymer polyethylene fiber, alumina fiber, silicon carbide fiber, boron fiber, tyranno fiber*and hybrid materials thereof, a variety of whiskers of potassium titanate, calcium silicate, silicon carbode, iron, chromium, and tungsten, fillers such as calcium carbonate and aluminium hydroxide, liquid or solid rubbers, flame retardants such as halogen compounds, antimony trioxide, coupling agents, colorants, reactive diluents such as epoxy compounds and styrene monomer, and solvents such as acetone, methylene chloride, chloroform and alcohol. Furthermore, it is of course possible for the present invention to contain curable monomers and oligomers, thermoplastic resins, and curing agents other than used as components in the present invention within a scope capable of providing effects of the present invention.

The present invention will be explained in more detail by way of examples:

Example 1

100 parts by weight of compound "AXE" (trade name of Kanegafuchi Kagaku Kogyo K.K.) represented by the structural formula (4) (where R is a hydrogen atom.) were liquefied at 120°C , and then 23.8 parts by weight (1 amine equivalent to 1 epoxy equivalent) of 4,4'-diaminodiphenyl sulfone "DDS" (product of Wako Junyaku Kogyo K.K.) were added and dissolved into the liquefied compound AXE. Next, the temperature of the solution was heated to 80°C., and 1.5 parts by weight of t-butyl peroxybenzoate "PERBUTYL Z" (trade name of Nippon Yushi K.K.) were dissolved in the solution. After defoaming under reduced pressure, the solution was reacted at 120°C for 2 hours, and then subjected to post curing at 180°C for 2 hours, to thus obtain transparent brownish plastic sheets each having a thickness of 3mm and 7mm. The bending property of the plastic sheet having the thickness of 3mm was measured in accordance with the test method prescribed by JIS K-6911. The plain strain fracture toughness klc of the plastic sheet having the thickness of 7mm was measured in accordance with ASTM-E399. The glass transition temperature Tg was measured by tan $\sigma$ peak temperature (at 10Hz of frequency by gradually raising temperature by 1.5 °C per minute) of viscoelasticity characteristic. Measured values of physical properties are shown in Table 1. The components and their amounts of the resin composition are shown in Table 5.

* Tyranno fiber is a super heat-resistant inorganic fiber composed of 45-53% of silicon, 25-33% of carbon, 15-20% of oxygen and 1-5% of titanium, developed by Ube Kosan K.K., a Japanese company. It is obtained by forming polytitanocarbosilane into a fiber, followed by baking.

Example 2

Transparent dark brownish plastic sheets were obtained in the same way as in Example 1, except that glycidyl methacrylate "BLEMMER G" (trade name of Nippon Yushi K.K.) was used in place of "AXE" and that the amount of DOS was changed from 23.8 parts by weight to 44 parts by weight. Measured values of physical properties are also shown in Table 1. The components and their amounts of the resin composition are shown in Table 5.

Example 3

Transparent light brownish plastic sheets were obtained in the same way as in Example 1, except that 18 parts by weight of diaminodiphenyl methane (4,4'-methylene dianiline) "DDM" (product of Wako Junyaku Kogyo K.K.) were used in place of DDS. Measured values of physical properties are also shown in Table 1. The components and their amounts of the resin composition are shown in Table 5.

Example 4

Transparent dark brownish plastic sheets were obtained in the same way as in Example 1, except that glycidyl methacrylate BLEMMER G was used in place of AXE and that 35 parts by weight of DDM were used in place of DDS. Measured values of physical properties are also shown in Table 1. The components and their amounts of the resin composition are shown in Table 5.

Comparative Example 1

Transparent light brownish plastic sheets were obtained in the same way as in Example 1, except that 16 parts by weight of isophorone diamine "IPD" (product of Tokyo Kasei K.K.) as dissolved at 60 °C were used in place of DDS. Measured values of physical properties are also shown in Table 1. The components and their amounts of the resin composition are shown in Table 5.

Comparative Example 2

Transparent light brownish plastic sheets were obtained in the same way as in Example 1, except that 5 parts by weight of boron trifluoride monoethylamine "BF3MEA" (product of Hashimoto Kasei K.K.) were used as dissolved at 80 °C in place of DDS. Measured values of physical properties are also shown in Table 1. The components and their amounts of the resin composition are shown in Table 5.

Comparative Example 3

Transparent dark brownish plastic sheets were obtained in the same way as in Example 1, except that bisphenol A diglycidylether "EPIKOTE 828" (trade name of Yuka-Shell K.K. number average molecular weight : 376) was used in place of AXE, 33.3 parts by weight of DDS were used and that PERBUTYL Z was not used. Measured values of physical properties are also shown in Table 1. The components and their amounts of the resin composition are shown in Table 5.

Comparative Example 4

Transparent dark brownish plastic sheets were obtained in the same way as in Example 1, except that tetraglycidyl diaminodiphenyl methane EPOTOHTO YH434 (trade name of Tohto Kasei K.K.) was used in place of AXE, 50.4 parts by weight of DDS were used and that PERBUTYL Z was not used. Measured values of physical properties are also shown in Table 1. The components and their amounts of the resin composition are shown in Table 5.

Comparative Example 5

Transparent light brownish plastic sheets were obtained in the same way as in Example 1, except that EPIKOTE 828 was used in place of AXE, 26.7 parts by weight of DDM were used in place of DDS and that PERBUTYL Z was not used. Measured values of physical properties are also shown in Table 1. The components and their amounts of the resin composition are shown in Table 5.

Comparative Example 6

Transparent dark brownish plastic sheet was obtained in the same way as in Example 1, except that EPOTOHTO YH434 was used in place of AXE, 40.3 parts by weight of DDM were used in place of DDS and that PERBUTYL Z was not used. Measured values of physical properties are also shown in Table 1. The components and their amounts of the resin composition are shown in Table 5.

Table 1

| Measured values of physical properties | | | | |
|---|---|---|---|---|
| | Bending strength (kg/mm$^2$) | Bending modulus (kg/mm$^2$) | klc (kg/mm$^{3/2}$) | Tg (°C) |
| Example 1 | 15.3 | 440 | 1.9 | 226 |
| 2 | 12.7 | 470 | 1.2 | 242 |
| 3 | 14.6 | 404 | 2.0 | 201 |
| 4 | 13.1 | 421 | 1.3 | 211 |
| Comp.Example 1 | 14.9 | 405 | 1.8 | 194 |
| 2 | 11.5 | 480 | 0.9 | 216 |
| 3 | 14.3 | 383 | 1.4 | 198 |
| 4 | 10.2 | 472 | 0.7 | 248 |
| 5 | 13.9 | 343 | 1.5 | 164 |
| 6 | 11.5 | 392 | 0.8 | 214 |

Example 5

100 parts by weight of AXE, 23.8 parts by weight (1 amine equivalent to 1 epoxy equivalent) of DDS, 1.5 parts by weight of PERBUTYL Z, and 31.3 parts by weight of a polyetherimide "ULTEM 1000" (trade name of Engineering Plastics K.K.) were dissolved into a mixed solution of methylene chloride and methanol (weight ratio:95/5). After the removal of the solvent under reduced pressure, the mixture was molded at 150 °C at an increased pressure of 2 kg/cm$^2$ for one hour, to thus obtain an opaque yellow-brownish plastic sheet having a thickness of 6mm. Measured values of physical properties are shown in Table 2. The components and their amounts of the resin composition are shown in Table 5.

Example 6

An opaque yellow-brownish plastic sheet was obtained in the same way as in Example 5, except that 100 parts by weight of BLEMMER G was used in place of AXE, 44 parts by weight of DDS, 1.5 parts by weight of PERBUTYL Z and 36 parts by weight of ULTEM 1000 were used. Measured values of physical properties are also shown in Table 2. The components and their amounts of the resin composition are shown in Table 5.

Comparative Example 7

An opaque light brownish plastic sheet was obtained in the same way as in Example 5, except that 100 parts by weight of EPIKOTE 828 was used in place of AXE, 33.3 parts by weight of DDS and 33.3 parts by weight of ULTEM 1000 were used, and that PERBUTYL Z was not used. Measured values of physical properties are also shown in Table 2. The components and their amounts of the resin composition are shown in Table 5.

Comparative Example 8

An opaque brownish plastic sheet was obtained in the same way as in Example 5, except that 100 parts by weight of EPOTOHTO YH434 was used in place of AXE, 50.4 parts by weight of DDS and 37.6 parts by weight of ULTEM 1000 were used, and that PERBUTYL Z was not used. Measured values of physical properties are also shown in Table 2. The components and their amounts of the resin composition are shown in Table 5.

Table 2

| Measured values of physical properties | | |
|---|---|---|
| | klc ($kg/mm^{3/2}$) | Tg (°C) |
| Example 5 | 7.0 | 215 |
| 6 | 5.2 | 230 |
| Comp.Example 7 | 4.9 | 172 |
| 8 | 3.1 | 231 |

Example 7

15.28 parts by weight of AXE, 61.11 parts by weight of EPIKOTE 828 (number average molecular weight;376) and 25 parts by weight of the ULTEM 1000 were mixed and uniformly dissolved into methylene chloride at room temperature, and then methylene chloride was completely removed at 80 °C. Then, after heating the mixture to 110°C, 23.38 parts by weight of DDS were added and dissolved in the mixture. Thereafter, 0.23 part by weight of PERBUTYL Z was added and stirred to thus give a uniform composition.

Next, the obtained composition was reacted at 150°C for one hour, and then subjected to post curing at 180°C for 2 hours, thereby to obtain an opaque yellow-brownish plastic sheet having a thickness of 7mm. Measured values of physical properties are shown in Table 3. The components and their amounts of the resin composition are shown in Table 5.

Example 8

A composition was prepared in the same way as in Example 7, except that 14.8 parts by weight of BLEMMER G was used in place of AXE, 59.2 parts by weight of EPIKOTE 828, 25.78 parts by weight of DDS, 0.22 parts by weight of the PERBUTYL Z, and 25 parts by weight of ULTEM 1000 were used.

Next, the obtained composition was reacted at 150°C for one hour, and then subjected to post curing at 180°C for 2 hours, and further at 200°C for 4 hours, thereby to obtain an opaque yellow-brownish plastic sheet having a thickness of 7mm. Measured values of physical properties are also shown in Table 3. The components and their amounts of the resin composition are shown in Table 5.

Table 3

| Measured values of physical properties | | |
|---|---|---|
| | klc ($kg/mm^{3/2}$) | Tg (°C) |
| Example 7 | 6.7 | 207 |
| 8 | 5.8 | 205 |

Example 9

15.28 parts by weight of AXE and 61.11 parts by weight of EPIKOTE 828 and 25 parts by weight of a polyethersulfone "VICTREX 4100G" (trade name of Imperial Chemical Industries, Ltd., number average molecular weight: 17700) were mixed and uniformly dissolved into methylene chloride at room temperature, and then methylene chloride was completely removed at 50°C. Then, after heating the mixture to 110°C, 23.38 parts by weight of DDS were added and uniformly dissolved. Moreover, 0.23 part by weight of PERBUTYL Z was added and stirred to thus give a uniform composition.

Next, the obtained composition was poured into aluminum molds, each having a depth of 3mm and 7mm previously heated to 150 °C, and then heated for 60 minutes to conduct the reaction, to thereby obtain opaque light yellow-brownish plastic sheets, each having 100mm X 50mm X 3mm and 100mm X 50mm X 7mm (length, width and thickness). Thereafter, the plastic sheets were subjected to post curing at 180°C for 2 hours. Measured values of physical properties are shown in Table 4. The components and their amounts of the resin composition are shown in Table 5.

Example 10

Opaque light yellow-brownish plastic sheets were obtained in the same way as in Example 9, except that the heating conditions were changed from 150 °C × 60 minutes to 120 °C × 150 minutes and from 180 °C × 2 hours to 180 °C × 200 minutes, respectively. Measured values of physical properties are also shown in Table 4. The components and their amounts of the resin composition are shown in Table 5.

Example 11

Opaque light yellow-brownish plastic sheets were obtained in the same way as in Example 9, except that 22.9 parts by weight of AXE, 53.59 parts by weight of EPIKOTE 828, 25 parts by weight of VICTREX 4100G, 23.1 parts by weight of DDS, and 0.34 part by weight of PERBUTYL Z were used. Measured values of physical properties are also shown in Table 4. The components and their amounts of the resin composition are shown in Table 5.

Example 12

Opaque light yellow-brownish plastic sheets were obtained in the same way as in Example 9, except that 30.84 parts by weight of AXE, 46.25 parts by weight of EPIKOTE 828, 25 parts by weight of VICTREX 4100G, 22.45 parts by weight of DDS and 0.46 part of PERBUTYL Z were used. Measured values of physical properties are also shown in Table 4. The components and their amounts of the resin composition are shown in Table 5.

Comparative Example 9

Transparent brownish plastic sheets were obtained in the same way as in Example 9, except that VICTREX 4100G was not used. Measured values of physical properties are also shown in Table 4. The components and their amounts of the resin composition are shown in Table 5.

Comparative Example 10

Transparent brownish plastic sheets were obtained in the same way as in Example 11, except that VICTREX 4100G was not used. Measured values of physical properties are also shown in Table 4. The components and their amounts of the resin composition are shown in Table 5.

Comparative Example 11

Opaque light yellow-brownish plastic sheets were obtained in the same way as in Example 9, except that 100 parts by weight of EPIKOTE 828, 33.3 parts by weight of VICTREX 4100G and 33.3 parts by weight of DDS were used. Measured values of physical properties are also shown in Table 4. The components and their amounts of the resin composition are shown in Table 5.

Table 4

| | Measured values of physical properties | | | |
|---|---|---|---|---|
| | Bending strength ($kg/mm^2$) | Bending modulus ($kg/mm^2$) | klc ($kg/mm^{3/2}$) | Tg (°C) |
| Example 9 | 19.5 | 392 | 4.1 | 180 |
| 10 | 20.5 | 399 | 4.6 | 200 |
| 11 | 19.5 | 427 | 3.9 | 178 |
| 12 | 17.3 | 401 | 3.6 | 182 |
| Comp.Example 9 | 12.7 | 373 | 1.8 | 195 |
| 10 | 13.1 | 386 | 1.6 | 197 |
| 11 | 15.0 | 321 | 2.2 | 178 |

As stated above, according to the present invention, thermosetting resin compositions having well-proportionate mechanical strength, toughness and thermal resistant property are provided.

Table 5: Components of thermosetting resin compositions

| Examples & Comparative Examples | Epoxy compound (a) AXE | Epoxy compound (a) GMA (BLEMMER G) | Epoxy compound (e) bisphenol A type epoxy (EPIKOTE 828) | Epoxy compound tetraglycidyl diaminodiphenyl methane (YH434) | Curing agent, Aromatic amine (b) 4,4'-diaminodiphenyl sulfone (DDS) | Curing agent, Aromatic amine (b) diaminodiphenyl methane (DDM) | Curing agent, Aliphatic isophorone diamine (IPD) | Curing agent, Aliphatic boron trifluoride monoethyl amine (BF3MEA) | Radical Polymerization initiator (c) t-butyl peroxybenzoate (PERBUTYL Z) | Thermoplastic resin (d) polyetherimide (Ultem 1000) | Thermoplastic resin (f) polyethersulfone (VICTREX 4100 G) |
|---|---|---|---|---|---|---|---|---|---|---|---|
| Example 1 | 100 | | | | 23.8 | | | | 1.5 | | |
| 2 | | 100 | | | 44 | | | | 1.5 | | |
| 3 | 100 | | | | | 18 | | | 1.5 | | |
| 4 | | 100 | | | | 35 | | | 1.5 | | |
| 5 | 100 | | | | 23.8 | | | | 1.5 | 31.3 | |
| 6 | | 100 | | | 44 | | | | 1.5 | 36 | |
| 7 | 15.28 | | 61.11 | | 23.38 | | | | 0.23 | 25 | |
| 8 | | 14.8 | 59.2 | | 25.78 | | | | 0.22 | 25 | |
| 9 | 15.28 | | 61.11 | | 23.38 | | | | 0.23 | | 25 |
| 10 | 15.28 | | 61.11 | | 23.38 | | | | 0.23 | | 25 |
| 11 | 22.9 | | 53.59 | | 23.1 | | | | 0.34 | | 25 |
| 12 | 30.84 | | 46.25 | | 22.45 | | | | 0.46 | | 25 |
| Comp. Ex. 1 | 100 | | | | | | 16 | | 1.5 | | |
| 2 | 100 | | | | | | | 5 | 1.5 | | |
| 3 | | | 100 | | 33.3 | | | | | | |
| 4 | | | | 100 | 50.4 | | | | | | |
| 5 | | | 100 | | | 26.7 | | | | | |
| 6 | | | | 100 | | 40.3 | | | | | |
| 7 | | | 100 | | 33.3 | | | | | 33.3 | |
| 8 | | | | 100 | 50.4 | | | | | 37.6 | |
| 9 | 15.28 | | 61.11 | | 23.38 | | | | 0.23 | | |
| 10 | 22.9 | | 53.59 | | 23.1 | | | | 0.34 | | |
| 11 | | | 100 | | 33.3 | | | | 0.23 | | 33.3 |

## Claims

1. A thermosetting resin comprising the following components (a), (b) and (c), the amount of the component (b) being 0.6 to 1.5 amine equivalents to 1.0 epoxy equivalent of the component (a),

wherein

(a) is a compound containing at least one epoxy group and at least one vinyl group in the molecule,
(b) is an aromatic amine curing agent, and
(c) is a radical polymerization initiator.

**2.** A thermosetting resin comprising the following components (a), (b), (c) and (d), the amount of the component (d) being 5 to 100 parts by weight to 100 parts by weight of the total amount of the component (a), (b) and (c), wherein

(a) is a compound containing at least one epoxy group and at least one vinyl group in the molecule,
(b) is an aromatic amine curing agent,
(c) is a radical polymerization initiator, and
(d) is a polyetherimide having a repeating unit represented by the following structural formula (1):

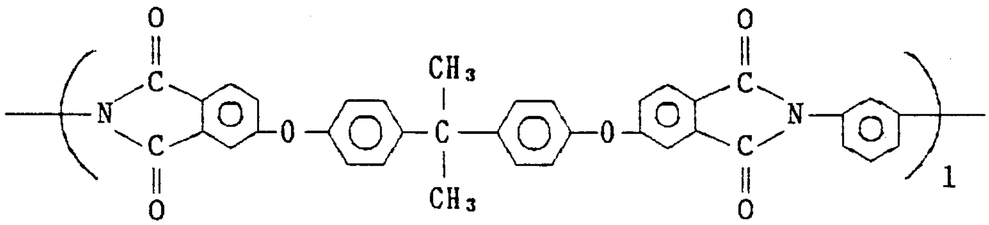
(1)

wherein 1 is an integer of 5 to 500.

**3.** A thermosetting resin comprising the following components (a), (b'), (c), (d) and (e), the amount of the component (d) being 5 to 100 parts by weight to 100 parts by weight of the total amount of the component (a), (b') and (c), wherein

(a) is a compound containing at least one epoxy group and at least one vinyl group in the molecule,
(b') is a curing agent,
(c) is a radical polymerization initiator, and
(d) is a polyetherimide having a repeating unit represented by the following structural formula (1):

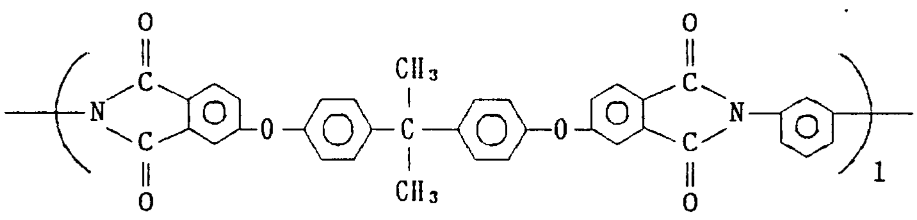
(1)

wherein 1 is an integer of 5 to 500.
(e) is a bisphenol A type expoxy compound represented by the following structural formula (2):

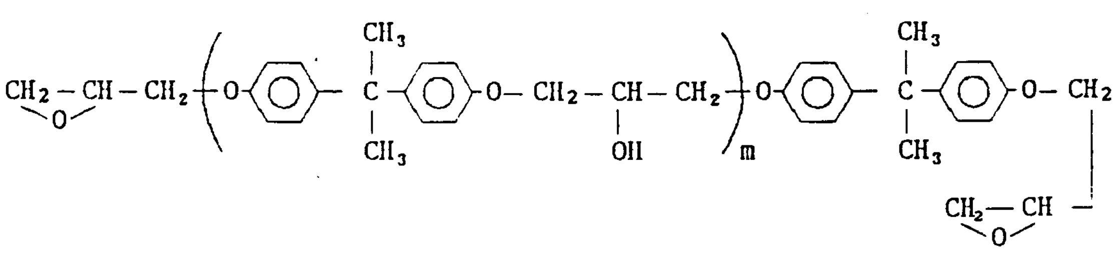
(2)

wherein m is 2.3 or less.

**4.** A thermosetting resin comprising the following components (a), (b'), (c), (e) and (f), the amount of the component (f) being 5 to 100 parts by weight to 100 parts by weight of the total amount of the

component (a), (b') and (c), wherein

(a) is a compound containing at least one epoxy group and at least one vinyl group in the molecule,
(b') is a curing agent,
(c) is a radical polymerization initiator, and
(e) is a bisphenol A type expoxy compound represented by the following structural formula (2):

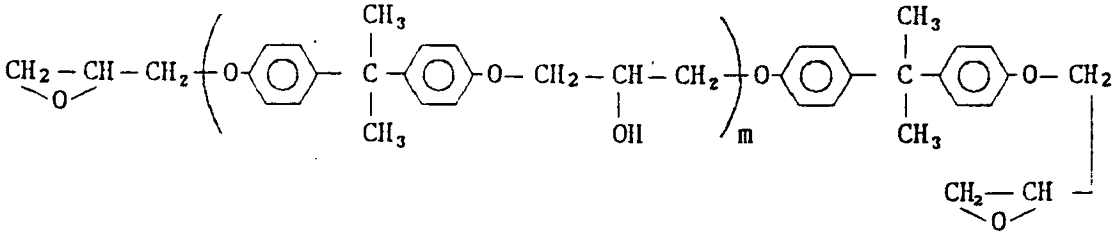

(2)

wherein m is 2.3 or less.
(f) is a polyethersulfone represented by the following structural formula (3):

$$-\!\!\left(X-SO_2\right)_n\!\!- \qquad (3)$$

wherein X is at least one group of the following groups:

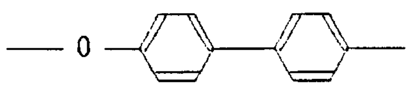

,

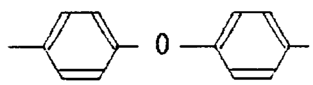

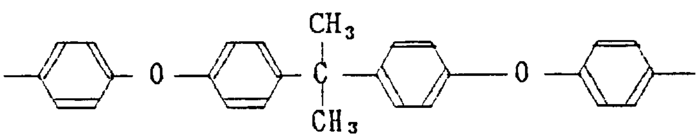

,

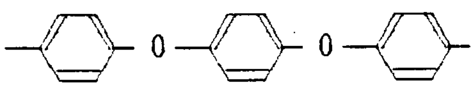

or

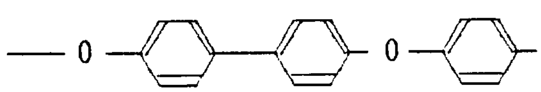

,

and n is 10 to 700.

**5.** The thermosetting resin composition of Claims 3 or 4, wherein the amount of the component (e) is 10 to 90 parts by weight to 100 parts by weight of the total amount of the components (a) and (e).

**6.** The thermosetting resin composition of Claims 1, 2, 3 or 4, wherein the component (a) is an epoxy compound represented by the following structural formula (4):

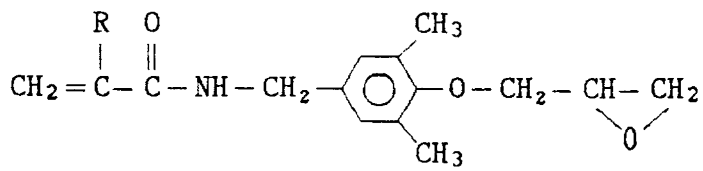 (4)

wherein R is a hydrogen atom or a methyl group.

7. The thermosetting resin composition of Claims 1, 2, 3 or 4, wherein the component (a) is an epoxy compound represented by the following structural formula (5):

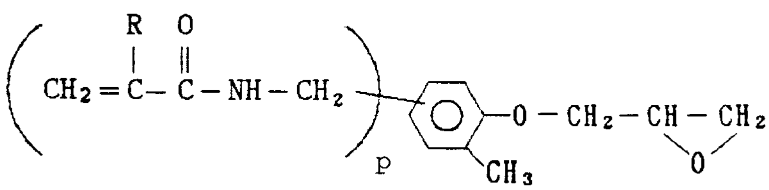 (5)

wherein R is a hydrogen atom or a methyl group and p is 1 or 2.

8. The thermosetting resin composition of Claims 1, 2, 3 or 4, wherein the component (a) is glycidyl methacrylate.

9. The thermosetting resin composition of Claims 3 or 4, wherein the component (b') is at least one of an aromatic amine curing agent, an acid anhydride curing agent, an imidazole curing agent or potential curing agent.

European Patent Office

# EUROPEAN SEARCH REPORT

Application Number

EP 93 10 2961

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | GB-A-1 083 490 (GENERAL MOTORS)<br>* the whole document *<br>--- | 1,8 | C08F283/04 |
| X | DATABASE WPIL<br>Week 8732, 7 October 1987<br>Derwent Publications Ltd., London, GB;<br>AN 87-224413<br>& JP-62 148 569 (MATSUSHITA ELEC WORKS) 2 July 1987<br>* abstract *<br>--- | 1-5,8,9 | |
| X | US-A-3 338 985 (MAGAT ET AL.)<br>* the whole document *<br>--- | 1,8 | |
| A | EP-A-0 266 986 (AMOCO)<br>----- | 1-9 | |
| | | | **TECHNICAL FIELDS SEARCHED (Int. Cl.5 )** |
| | | | C08F<br>C08L |

The present search report has been drawn up for all claims

| Place of search | Date of completion of the search | Examiner |
|---|---|---|
| THE HAGUE | 10 JUNE 1993 | ANDRIOLLO G.R. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)